# EUROPEAN PATENT SPECIFICATION

(11) **EP 1 092 882 B1**
(45) Date of publication and mention of the grant of the patent: **28.06.2006**
(21) Application number: 00308913.3
(22) Date of filing: 10.10.2000
(51) Int. Cl.: F16B 13/02, B29D 23/00, B29D 16/00, B29D 15/00

(54) **Plastic anchoring dowel, with an hexagonal cross section**
Verankerungsdübel aus Kunstoff mit hexagonalem Querschnitt
Cheville d'ancrage à section hexagonale, en matériau plastique

(30) Priority: 11.10.1999 FR 9912623
(43) Date of publication of application: 18.04.2001
(73) Proprietor: Black & Decker Inc., Newark, DE 19711 (US)
(72) Inventor: Anquetin, Robert, 91690 Fontaine La Riviere (FR)
(74) Representative: Bell, Ian Stephen

(56) References cited:
- DE-A- 3 241 158
- FR-A- 2 420 050
- US-A- 3 522 756

## Description

The present invention relates to a plug for fixing a screw in a hole along a predetermined longitudinal axis, of the type comprising a tubular longitudinal body defining an internal longitudinal passage for the screwing of the screw and having an external profile for fastening in the hole in a longitudinal direction opposed to a longitudinal direction for screwing the screw into the passage, the body also comprising at least two longitudinal slots which open transversely into the passage and into the fastening profile, are closed in said opposing direction, are uniformly distributed angularly round the axis and/or are mutually symmetrical about the axis and allow transverse expansion of the body during the screwing of a screw into the passage wherein the body has an external longitudinal alternation of portions of which the cross-section does not have symmetry of revolution round the axis, which are divided by slots and are offset angularly relative to one another round the axis so as to form relative to one another transverse projections which are angularly mutually offset round the axis, defining the fastening profile.

In general, the term "axis" or "longitudinal axis" here denotes an axis of the plug as well as the axis of the hole for linguistic simplicity, and it will be appreciated that these axes coincide when the plug is engaged in the hole.

Various embodiments illustrated of a plug of this type are already known which have the common feature that the profile for fastening the body of the plug in the hole has symmetry of revolution round the axis of the plug; thus, in a known embodiment, the fastening profile has the form of a longitudinal alternation of transverse annular beads generated by revolution round the axis of the plug and of transverse grooves which are also annular and generated by revolution round this axis; in a further embodiment, also known, the fastening profile is delimited by a longitudinal succession of truncated cone-shaped transverse rings generated by revolution round the axis of the plug and converging in the direction of screwing of the screw.

It is found during use that symmetrical fixing profiles of this type, generated by revolution round the axis of the plug, do not always prevent the plug sufficiently from rotating round its axis in the hole, particularly when a screw is initially screwed into the passage in the plug, in other words before the plug has begun to expand inside the hole, even if the body of the plug is also given a fair number of reliefs intended to counteract this tendency of the plug to turn in the hole.

French patent publication no. 2420050 and US patent no. 3522756 disclose a plug according to the pre-characterising portion of claim 1.

Each portion can interact with the adjacent portion in the manner of a chuck projecting from it in a radial direction relative to the axis of the plug and improve the fixing of the plug in the hole, especially to prevent rotation, in particular when the material in which the receiving hole is dug is a porous and/or heterogeneous material such as, for example, a concrete.

Obviously, to assist the fixing of the plug in the hole, at least some portions can be flared in the direction opposed to the direction of screwing to improve the fixing of the plug against

The effect of fixing the plug to prevent rotation and, especially when certain portions are flared in this way, to prevent pulling is further improved if, according to a preferred embodiment of the present invention, the cross-section of the various portions is approximately polygonal and symmetrical about the axis to create a plurality of chucks for fixing the plug inside the hole in the region of each portion.

Thus, said cross-section can be approximately hexagonal and each portion can be offset angularly by 30° round the axis relative to a longitudinally adjacent portion, and this provides all the security required for fixing the plug in a hole and, at the same time, is compatible with the moulding of the plug inside a die comprising two shells mutually connected along a plane including the axis of the plug to be produced, under conditions of cost which are substantially unchanged relative to the production cost of a state of the art plug.
Advantageously, the body has an external transverse annular groove between two longitudinally adjacent portions designed in the characteristic manner of the invention and allowing each of these portions to perform a fixing function without the risk of obstruction for this purpose owing to the presence of the longitudinally adjacent portions.

A plug according to the present invention is capable of being placed in solid materials such as concrete, solid brick or stone in which it is held by the radial stress relative to its axis of the various portions of the body between the screw, which tends to cause the radial expansion thereof as it is screwed into the passage in the body and the hole in which the plug is engaged.

The slots are closed not only in the direction opposed to the direction of screwing but also in the direction of screwing, the plug according to the invention can be placed not only in solid materials, in which it is fixed by the phenomenon just described, generally in a blind hole drilled into the mass of the material from one of its faces, through which the plug is then engaged in the hole and from which side screwing is then carried out, but also in hollow materials such as plasterboard or hollow brick having a thickness along the axis of the hole which is smaller than the longitudinal dimension of the plug in such a way that a traversing hole is made for receiving the plug, from a first face or front face of the material. In the latter case, in so far as at least one longitudinally extreme portion, in the direction of screwing, is continuous in a circumferential direction round the axis of the plug and can therefore cooperate in the manner of a nut with the screw when it engages with it as it is being screwed, continuation of this screwing causes an apparent shortening of the plug, accompanied by expansion thereof in the radial direction relative to its axis and progressive opening of the longitudinal slots in an extreme region of the plug projecting from the hole through a second or rear face of the material longitudinally opposed to the front face through which the plug is introduced into the hole and is screwed through a second face or rear face of the material. In other words, screwing causes the plug to mesh on the rear face of the supporting material.

Therefore, the plug according to the invention can be used in the manner of known so-called "expansion" plugs.

To this end, the screwing passage is preferably open in both longitudinal directions.

In a manner known *per se*, the screwing passage is advantageously delimited by a cylindrical internal peripheral face of the body generated by revolution round the axis of the plug with a diameter which is such that this internal peripheral face meshes for the screwing of the screw, at least over a proportion of the longitudinal span of the passage from a longitudinally extreme region of the body in the screwing direction and at least over a proportion of the longitudinal span of the slots.

Preferably, however, the screwing passage has several longitudinally mutually juxtaposed differentiated regions. Preferably, therefore, it is delimited by a cylindrical internal peripheral face of the body generated by revolution round the axis with a diameter which is such that this internal peripheral face allows coaxial guidance of the screw without meshing for the screwing thereof, over a proportion of the longitudinal span of the passage from a longitudinally extreme region of the body in the direction opposed to the direction of screwing, and the two aforementioned cylindrical faces of the screwing passage are mutually connected by a truncated cone-shaped face generated by revolution round the axis of the plug, the slots being closed in the direction opposed to the direction of screwing at an intermediate longitudinal level of this truncated cone-shaped face.

Externally, outside said portions defining the fixing profile in the manner characteristic of the present invention, the body of the plug can have a known configuration and, in particular in a longitudinally extreme region in the direction of screwing, the body of the plug is advantageously delimited externally by an at least approximately truncated cone-shaped face generated by revolution round the axis and converging in the direction of screwing, and this facilitates introduction of the plug into the hole whereas the body can have, externally of said portions in a longitudinally extreme region in the direction opposed to the direction of screwing, a cylindrical external peripheral face generated by revolution round the axis, in order to adjust itself in the hole in the vicinity of its entrance in the face of the material through which this hole is drilled therein and through which the plug is then engaged therein, then the screw in the plug.

In a manner known *per se*, the body advantageously has, in this cylindrical external peripheral face, at least two notches which are uniformly distributed angularly round the axis of the plug and/or are mutually symmetrical about the axis and carries in each of these notches a respective integral tongue to prevent rotation and/or pulling in the hole, which tongue forms an elastic projection relative to said external peripheral face while progressively moving away from it in the direction opposed to the direction of screwing.

Notches of this type, of which there are generally two which are diametrically opposed with respect to the axis of the plug, and tongues of this type in a proportion of one per notch are well known in the state of the art, and it is known that state of the art tongues sometimes retract completely in the notches on contact with the surrounding material when the plug is engaged in the hole, to such an extent that they become ineffective.

This drawback is avoided according to a preferred embodiment of the present invention by proposing that each tongue extends beyond the corresponding notch in the direction opposed to the direction of screwing so that it cannot retract completely into this notch by elastic deflection.

Now the engagement of the plug in the hole is accompanied by plastic deformation of each tongue and/or of the material surrounding the hole, enabling each tongue to maintain its effect of fixing the plug in the hole.

Furthermore, the body can advantageously carry at least one integral accessory means, projecting toward the exterior in a longitudinally extreme region in the direction opposed to the direction of screwing, for cooperation with the hole, selected from a group comprising a transverse flange for limiting the penetration in the hole which, in particular, can be removed by pulling or sectioning, at least one ring for preventing return after penetration in the hole, and at least two longitudinal ribs for wedging in the hole, which are uniformly distributed angularly round the axis and/or are mutually symmetrical to this axis, as known from state of the art plugs.

In an original manner, however, according to a preferred embodiment of a plug according to the invention, the body carries, in a longitudinally extreme region in the direction of screwing, an integral axial longitudinal extension which is dimensioned longitudinally such that the sum of its longitudinal dimension and of the longitudinal dimension of the body between its longitudinally extreme region in the direction of screwing and its longitudinally extreme region in said opposing direction is at least equal to a necessary minimum depth of the hole along the axis. It is thus ensured that, once the plug has engaged completely in the hole, there is sufficient longitudinal clearance for then screwing a screw home, if necessary, especially in view of the lengths of screws which may be used, depending on the dimensions of the plug, and the standards which may prevail in this respect and with which the plug according to the invention obviously preferably complies.

Preferably, the axial longitudinal extension is capable of detaching itself from the body, in particular under the influence of a longitudinal thrust applied by the screw in the direction of screwing, and this avoids the need for intervention in order to detach it, especially if the plug is designed to be placed in a hollow material, in other words to expand in order to mesh with the supporting material by apparent shortening which forces the screw to protrude in the direction of screwing from the longitudinally extreme region of the body in this direction, in other words from the region forming the nut.

In a particularly simple and economical manner, especially since it is compatible with an advantageous process for producing the plug, which constitutes a further aspect of the present invention, the longitudinal extension of the body has the form of a ridge of material which straddles the passage transversely, is connected to the body on either side of the passage in regions which are diametrically opposed with respect to the axis and has convexity in the direction of screwing so as to form a point which projects in this direction relative to the body along the axis.

Apart from a plug, regardless of whether or not it has an extension shaped in this way, the present invention proposes a preferred process for producing this plug.

This process is characterised by the succession of stages involving:
a) producing or selecting, on the one hand, a punch having an external shape mating with that of said passage, with a longitudinal axis, and, on the other hand, a die having an internal shape mating wiht that of said fastening profile, with a longitudinal axis, the die comprising at least two detachably mutually connected parts along half planes delimited by its longitudinal axis and uniformly distributed angularly round it, the punch and the die having, externally and internally respectively, in a longitudinal direction corresponding to said direction of screwing, a transverse face for longitudinal abutment of the punch in the die in a relative position in which the punch, engaged coaxially in the die, defines an impression therewith having a shape mating with that of the plug to be produced,
b) placing the punch and the die in said relative position by interposing between them, inside the impression, cores, each of which has an external shape mating with that of one of the slots and which occupy relative positions identical to those of the slots,
c) injecting a plastics material in the fluid state into the impression through the abutting face of the die until the impression is filled with plastics material in the liquid state,
d) causing or permitting the setting of the plastics material to form a plug,
e) separating the punch from the die, the parts from the die and the cores in order to remove the plug from the mould.

Where possible, in view of the external configuration of the body of the plug to be produced, the aforementioned parts of the die consist of two shells of which each constitutes half of it and which are connected along two mutually co-planar half planes, in other words along a plane containing the longitudinal axis.

The production process according to the invention contrasts with a conventional process which involves injecting the plastics material in the liquid state into the impression using the punch, actually consisting of a hollow needle in the state of the art. This conventional production process has a fair number of drawbacks which are overcome according to the present invention.

One of these drawbacks resides in the fact that injection through the punch makes it necessary to maintain a space between the punch and the die and this is translated into the inevitable creation of a stopper of plastics material in a longitudinally extreme region of the passage, in the direction of screwing. This stopper has a thickness which is not negligible so, especially if the plug is to be used for fixing in a hollow material, it is necessary to remove this plug by a refinishing operation which is on the one hand awkward and on the other hand expensive in terms of labour and wastage. On the other hand, the process according to the invention allows direct injection, without refinishing, of a plug of which the passage is open in its longitudinally extreme region with reference to the direction of screwing.

Furthermore, the fact of using the punch in the form of a hollow needle as a means of injection of the plastics material in the liquid state in the formerly known process imposes a lower limit on the sizes which can be given to the passage, in other words to the plug in its entirety, whereas the cross-section of the punch used according to the present invention can be given any desired dimensions, including small dimensions; consequently, the body of the plug can be dimensioned as desired.

Finally, injection through the punch according to the state of the art does not necessarily produce a uniform distribution of the material in the impression, whereas this uniform distribution can easily be obtained by using the process according to the invention.

To this end, injection along the axis can be carried out by appropriate shaping of the abutting faces of the die and of the punch so as to define injection channels between them, but it is preferably proposed that said abutting faces have a configuration which is such that they mutually mate at the end of stage b) and stage c) is carried out by injecting the plastics material in the liquid state through at least one point which is offset from the abutting face of the punch in the direction away from the longitudinal axis which is then common to the punch and the die, namely preferably through several injection points disposed in this way, distributed uniformly angularly round the longitudinal axis of the die and equidistant from it, round the abutting face of the punch.

If the body of the plug is to have a longitudinal extension as mentioned hereinbefore, at least one sprue integral with the plug is left during stage e to form this longitudinal extension. If, furthermore, this longitudinal extension is to have the form of a bridge of material, as mentioned hereinbefore, the die is produced or selected, during stage a, in such a way that two joining half planes between two of its parts are co-planar and that said parts define two channels along these half planes for injection of plastics material in the liquid state, which have a common inlet for the plastics material disposed along a longitudinal axis of the die and spaced longitudinally from the abutting face thereof and which diverge mutually from this common inlet symmetrically relative to the longitudinal axis of the die up to two injection points which are diametrically opposed with respect to this longitudinal axis to shape said moulding sprue into a bridge of material. It will be noted that the production of such a bridge-shaped extension would be particularly difficult to produce with the production process of the state of the art which involves injecting the plastics material in the liquid state by means of the punch.

Further characteristics and advantages of the plug according to the invention and of the process according to the invention will emerge from the following description which relates to a non-limiting example and from the accompanying drawings which form an integral part of this description.

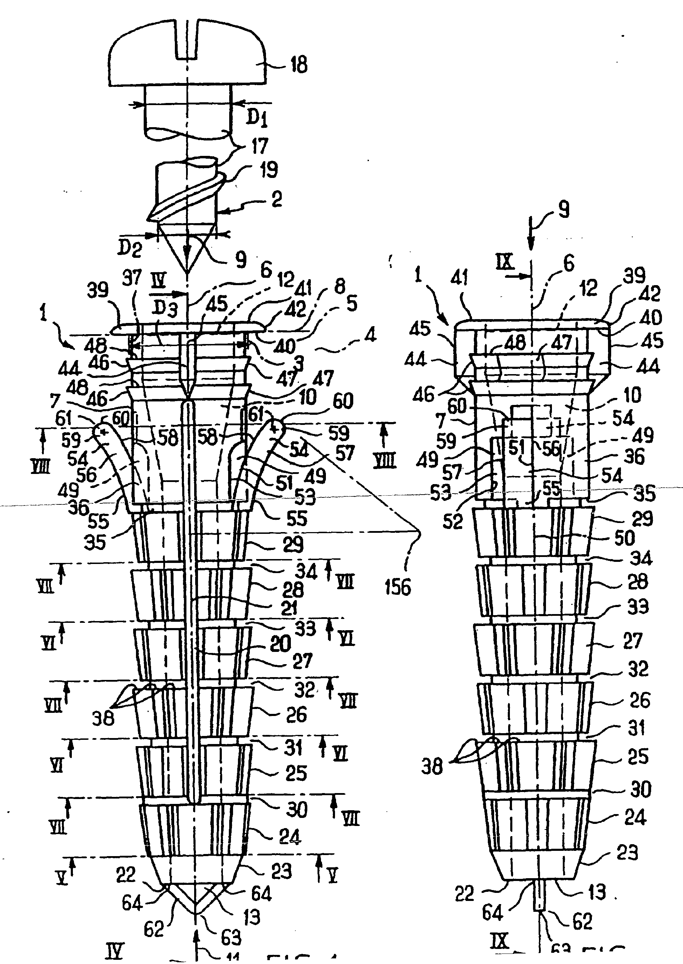

Fig. 1 and 2 show elevations of a plug according to the invention in two directions which are perpendicular to one another and perpendicular to the axis of the plug.

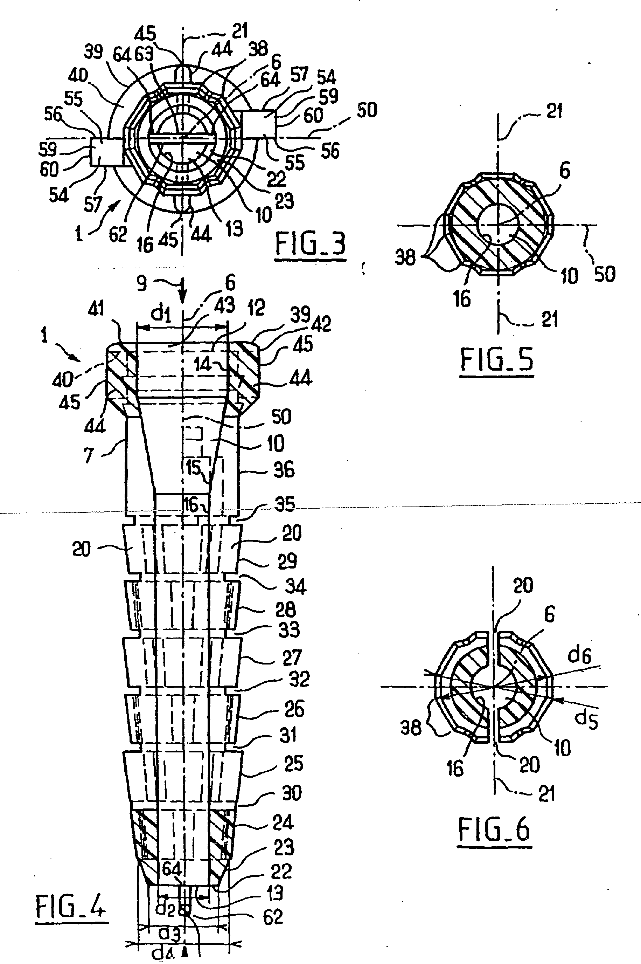

Fig. 3 is an end view of the plug, in a direction designated III in Fig. 1. Fig. 4 is a section of the plug through a plane containing its axis and designated by IV-IV in Fig. 1.

Fig. 5, 6, 7 and 8 are sections of the plug through planes perpendicular to its axis and designated V-V, VI-VI, VII-VII, VIII-VIII respectively in Fig. 1, which shows that the sectional plane V-V, a first sectional plane VII-VII, a first sectional plane VI-VI, a second sectional plane VII-VII, a second sectional plane VI-VI, a third sectional plane VII-VII and the sectional plane VIII-VIII follow one another in this order in direction III.

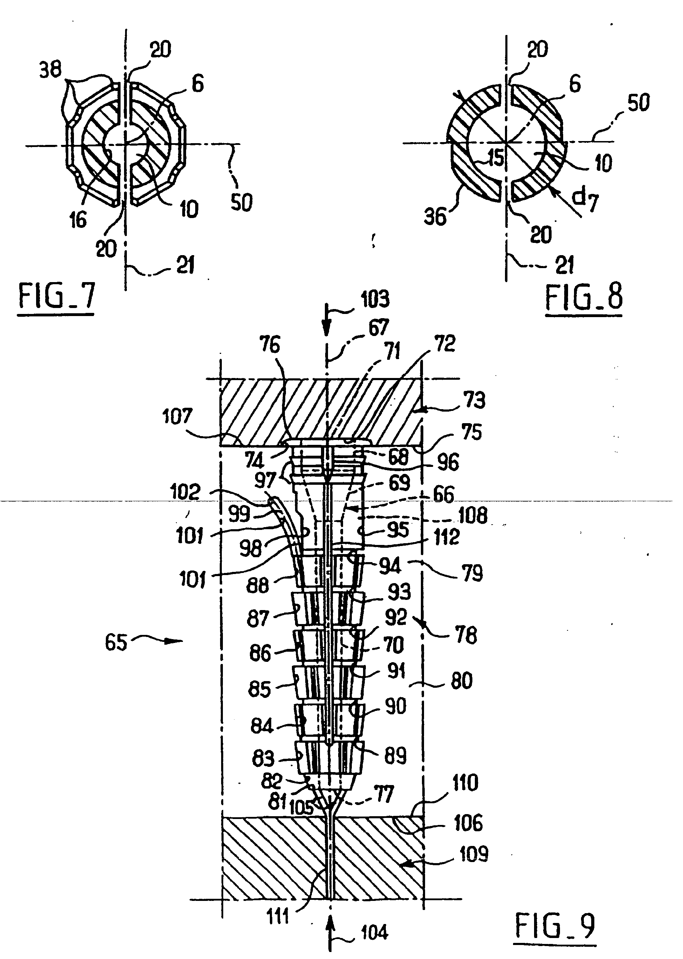

Fig. 9 is a view of a mould designed for producing the plug by injection moulding of a thermoplastic material by the process according to the invention in a section through a plane which, with reference to the moulded plug, contains the axis of the plug, is perpendicular to the plane designated by IV-IV in Fig. 1, is itself designated by IX-IX in Fig. 2 and constitutes a joining plane between two mutually identical shells, of which only one is shown in this figure and which constitute the essence of a die cooperating with a punch to define the mould impression.

Reference will first be made to Fig. 1 to 8 which show a plug according to the invention 1 produced in one piece from a moulded thermoplastic material having a degree of elastic flexibility, such as a polyamide TA6 or any other material conventionally used for producing known plugs of a type similar to the plug according to the invention.

Like these known plugs, the plug according to the invention 1 is designed to fix a wood screw 2 in a hole 3 made for this purpose in a material 4 constituting, for example, a wall 5 such as a partition or an internal wall, under conditions which are such that the screw 2 and the hole 3 have the same longitudinal axis 6 which will therefore serve as a reference for the longitudinal or axial direction or transverse, radial or circumferential direction.

To achieve this fixing, as generally known *per se*, the plug 1 comprises a longitudinal tubular body 7 having general symmetry of revolution round the axis 6 and internally lining the hole 3 at least over a proportion of its longitudinal dimension from a transverse face 8 or front face of the wall 5, in a longitudinal direction 9 which is a direction both of coaxial insertion of the plug 1 into the hole 3 and of coaxial screwing of the screw 2 into the plug 1. This direction 9 is opposed to the direction designated by III in Fig. 1.

To receive the screw 2, the body 7 has a longitudinal internal passage 10 which opens in the longitudinal direction 11 opposed to the direction 9 through an entrance 12 as well as in the direction 9 through an entrance 13, in the preferred example illustrated.

As shown more particularly in Fig. 4, the passage 10 is delimited, in the illustrated example, by three internal peripheral faces 14, 15, 16 of the body 7 which follow one another in this order in the direction 9 and have a respective shape generated by revolution round this axis 6.

More precisely, the face 14 which opens in the direction 11 through the entrance 12 is a cylinder generated by revolution round the axis 6 with a diameter d₁ substantially equal to, though slightly greater than, the diameter D₁ of the shank 17 of the screw 2 in the immediate vicinity of its head 18, this diameter also being the maximum diameter of the thread 19 of the screw 2. The face 14 is therefore capable of guiding the screw 2 coaxially inside the passage 10 but without meshing for screwing. The longitudinal dimension, not designated, of this internal peripheral face 14 is small in relation to the total longitudinal dimension, also not designated, of the passage 10. Preferably, it is at most equal to the longitudinal dimension, not designated, of the region of the shank 17 of the screw 2 directly adjacent to its head 18, that is of the region of this shank 17 which is generally free of threading and delimited by a cylindrical external peripheral face, not designated, generated by revolution round the axis 6, with the diameter D₁.

The internal peripheral face 16, itself adjacent to the entrance 13 also has the form of a cylinder generated by revolution round the axis 6 but with a diameter d₂ substantially identical to the diameter D₂ of the shank 17 of the screw 2, in other words to the diameter which the screw 2 has at the bottom of the thread at the connection between its threaded region and a pointed region with which it ends in the direction 9. This diameter D₂ is smaller than the diameter D₁, just as the diameter d₂ is smaller than the diameter d₁. Longitudinally, the internal peripheral face 16 has a dimension, not designated, essentially corresponding to the longitudinal dimension, not designated, of the passage 10 and preferably at least equal to the longitudinal dimension, not designated, of the threaded region of the shank 17 of the screw 18, and more precisely such that, over a large range of possibilities for longitudinal spacing between the head 18 of the screw 2 and the entrance 12, in view of the standard dimensions of wood screws, the thread 19 can mesh in the constituent material of the plug 1, especially in the immediate vicinity of the entrance 13 with no deformation of the body 7 of the plug 1 apart from slight radial expansion under the influence of penetration of the threaded region of the shank 17 into the internal peripheral face 16 of the passage 10 owing to arrangements which will be described hereinafter.

Between the internal peripheral faces 14 and 16, the internal peripheral face 15 has the form of a truncated cone generated by revolution round the axis 6 so that it is connected to both by a circular ridge, not designated. In other words, the internal peripheral face 15 converges in direction 9. Its longitudinal dimension, not designated, though greater than that of the internal peripheral face 14 in the example illustrated, is small in comparison with that of the internal peripheral face 16 and in comparison with that of the passage 10 considered in its entirety.

A person skilled in the art will easily understand that, owing to the aforementioned dimensioning, the internal peripheral face 16 in its entirety and at least the majority of the internal peripheral face 15 mesh with the thread 19 of the shank 17 of the screw 2.

This meshing is achieved due to the self-tapping effect which can even cause the shank 17, between the pitches of the thread 19, to rest directly against the internal peripheral face 16 and the majority of the internal peripheral face 15. Nevertheless, it is accompanied by a radial expansion of the body 7, except in the region of the internal peripheral face 14 and the part of the internal peripheral face 15 directly adjacent thereto and in the immediate vicinity of the entrance 13, owing to the aforementioned comparisons between the respective diameters of the passage 10 of the shank 17 of the screw 2.

On the other hand, over the majority of the longitudinal dimension of the internal peripheral face 16 from its connection to the internal peripheral face 15 and over the majority of this face 15 from its connection to the internal peripheral face 16, the radial expansion of the body 7 is required for fixing the plug 1 in the hole 3 and is facilitated in a manner known *per se* by the presence of longitudinal slots 20 which pass right through the body 7 from the passage 10 along respective half planes which are delimited by the axis 6 and are uniformly distributed angularly round it and/or are mutually symmetrical about it, in other words mutually co-planar. In the example illustrated, it is generally sufficient to have two slots 20 disposed in the same plane 21 containing the axis 6 and constituting the sectional plane IV-IV, and these slots 20 are mutually identical, but a greater number of slots 20 could also be provided, optionally differentiated but still disposed so as to maintain symmetry in the expansion of the body 7 from the axis 6.

In the example illustrated, the slots 20 are closed in both longitudinal directions, namely in the direction 11 in the region of the internal peripheral face 15 and much closer to its connection to the internal peripheral face 14 than to its connection to the internal peripheral face 16 and, in direction 9, at a certain longitudinal distance from the entrance 13 in a manner which will be specified hereinafter in such a way that the part of the body 7 directly adjacent to the entrance 3 is continuous in a circumferential direction and can behave like a nut when the screw 2 is screwed, allowing the plug 1 to be used as a means for fixing on a hollow material, whereas it can also be used as a means for fixing on a solid material.

According to a variation, not shown, however, the slots 20 while remaining closed in the direction 11 as described and illustrated, could also, on the contrary, be open in the direction 11, in other words to the entrance 13 to allows radial expansion of the body 7 to its entrance 13, the plug 1 then being used almost exclusively for fixing on a solid material.

The term hollow material here means a material which, from the front face 8 of the wall 5 has a longitudinal dimension smaller than that of the body 7 from the entrance 12 to the closed end of the slots 20 in the direction 9 so as to have longitudinally, remotely from the front face 8 a rear face, not shown, relative to which the body 7 of the plug 1 can project longitudinally in the direction 9 when the entrance 12 is flush with the front face 8. The term "solid material" denotes a material which, as illustrated, has a longitudinal dimension from the face 8 of the wall 5 which is either greater than the aforementioned longitudinal dimension of the body 7 in the case of slots 20 which are closed in both directions or is of a random size from the face 8 if this dimension is greater than the dimension separating the end of the slots 20 closed in the direction 11 when these slots 20 are open in the direction 9, from the entrance 12.

Round the entrance 13, the internal peripheral face 16 of the passage 10 is connected to a plane annular front face 22 generated by revolution round the axis 6 to which it is perpendicular, which face 22 is turned in the direction 9 and forms the end of the body 7 in this direction.

In the direction away from the axis 6, this front face 22 is connected to an external peripheral face 23 of the body 7 which has the form of a truncated cone generated by revolution round the axis 6 turned in the direction away from the axis 6 and flares progressively in the direction 11 so as to form a guide for coaxial introduction of the body 7 in the direction 9 into the interior of the hole 3.

To this end, at its connection to the front face 22 and remotely from this connection in the direction 11 respectively, the face 23 has a minimum diameter d₃ and a maximum diameter d₄, both greater than the diameter d₂ but smaller than a diameter D₃ which is that of a cylindrical internal peripheral face 24 of the hole 3 generated by revolution round the axis 6 over a longitudinal dimension, measured from the face 8, at least equal to the longitudinal dimension of the entire plug 1 from the entrance 12 in the direction 9. This diameter D₃ is obviously greater than the diameter d₁, and its relationship therewith will be clarified hereinafter.

In the direction 11, that is along its diameter d₄, the truncated cone-shaped face 23 is connected to the first of a longitudinal succession of external peripheral face portions of the body 7 which are characteristic of the present invention and of which six are provided in the example illustrated, though more or fewer of these portions could be provided without departing from the scope of the present invention.

These external peripheral face portions of the body 7 have been designated respectively by: 24, 25, 26, 27, 28 and 29 in the order in which they follow one another in the direction 11.

In the example illustrated, in which the slots 20 are closed in the direction 9, the first of these portions 24 is continuous in a circumferential direction so the region of the internal peripheral face 16 of the passage 10 acts as a nut in the same way as the region of this internal peripheral face 16 corresponding to the truncated cone-shaped external peripheral face 23. However, the slots 20 are closed at the joint between this first portion 24 and the portion 25 which follows it longitudinally in the direction 11, so the slots 20 open into all the portions 25 to 29 and, as will emerge hereinafter, are extended beyond the portion 29 in the direction 11.

In a variation, not shown, in which each slot 20 will be open in the direction 9, that is will open longitudinally into the face 22, these slots will also open into the external peripheral face 23 and into the external peripheral face portion 24 of the body 7 of the plug 1.

Apart from the fact that the portion 24 is not traversed by the slots 20 in the example illustrated, the portions 24 to 29 are mutually identical but they are orientated differently round the axis 6.

As shown more particularly in Fig. 5 to 7, each of them has a polygonal shape when viewed in cross-section, namely the form of a regular hexagon with broken corners in the non-limiting embodiment, and each of them flares in the direction 11 in such a way that at the connection between two of these portions, the one placed upstream with reference to the direction 11 has its greatest cross-section whereas the one placed downstream with reference to the direction 11 has its smallest cross-section.

Preferably, as illustrated, the longitudinally adjacent portions 24, 25, 26, 27, 28, 29 are mutually connected by an annular groove 30, 31, 32, 33, 34, 35 generated by revolution round the axis 6, and the extreme portion 29 in the direction 11 is connected by such a groove 35 to an external peripheral face portion 36 of the body 7 which follows it in the direction 11. Each of the grooves 30 to 35 is delimited by a respective cylindrical base, not designated, generated by revolution round the axis 6 and by two plane flanks, not designated, perpendicular to this axis 6 in the form of an upstream flank with reference to the direction 11 turned in the direction 9 and a downstream flank with reference to the direction 11 turned in the direction 9. In particular, therefore, the polygonal section of each portion 24, 25, 26 27, 28 and 29 creates, at the connection to the upstream flank of the groove 30, 31, 32, 33, 34 and 35 immediately adjacent in the direction 11, a plurality of angular transverse projections which constitute as many reliefs for fixing the body 7 of the plug 1 in the hole 3. To this end, in the region of this connection, each external peripheral face portion 24, 25, 26, 27, 28 and 29 has a diameter d₅ slightly greater than the diameter D₃ with reference to the axis 6 in such a way that the coaxial penetration of the body 7 of the plug 1 in the hole 3, in the direction 9, is accompanied by elastic, or plastic, deformation of the projections thus created which are therefore fastened better in the material 4 round the hole 3 to obstruct the extraction of the body 7 from the plug 1 in the direction 11 from the hole 3, as well as relative rotation round the axis 6.

To enable this effect to be achieved under the best conditions, the polygonal section of each of the external peripheral face portions 24, 25, 26, 27, 28 and 29 is preferably symmetrical about the axis 6.

In the example illustrated, in view of the general hexagonal shape with broken angles of each of the external peripheral face portions 24, 25, 26, 27, 28, 29, each one creates, in a downstream direction with reference to the direction 11, in other words at its connection to the groove 30, 31, 32, 33, 34, 35 following it respectively in the direction 11, twelve projections 38 for fixing in the material 4 through the internal peripheral face 37 of the hole 3. On the other hand, the minimum diameter d₆ of each portion 24, 25, 26, 27, 28, 29 with reference to the axis 6, in other words the diameter of this portion at an upstream end with reference to the direction 11, can be slightly smaller than the diameter D₃ of the internal peripheral face 37 of the hole 3 while being at least equal to the diameter d₄.

To enable each of the projections 37 to be released to a maximum, in other words to be able to best fulfil its function of fastening on the internal peripheral face 37 of the hole 3, two longitudinally adjacent portions 24, 25, 26, 27, 28, 29 are mutually offset angularly round the axis 6, the angular offset being 60° in the example illustrated.

Thus, the portions 24, 26, 28 are orientated identically round the axis 6, and the portions 25, 27, 29, also orientated identically round this axis 6, are offset angularly by 30° round this axis relative to the portions 24, 26, 28; the same obviously applies to the corresponding projections 38.

A person skilled in the art will easily understand that the general form of regular polygon centred on the axis 6 given in the example illustrated at the cross-section of each of the external peripheral face portions 24, 25, 26, 27, 28 and 29 merely constitutes a non-limiting, though currently preferred, example, but it will be appreciated that any other cross-sectional shape of each of the portions 24, 25, 26, 27, 28 and 29 not having symmetry of revolution round the axis 6 and corresponding to an angular offset of two longitudinally adjacent portions such that the longitudinal juxtaposition of the various portions creates transverse projections mutually offset angularly round the axis 6 and defining a profile for fastening in the hole 3, against extraction in the direction 11 and relative rotation round the axis 6, could also be satisfactory and would not therefore depart from the scope of the present invention. This form could also be identical or differ from one portion to another.

The external peripheral face portion 36 of the body 7 of the plug 1 itself is essentially in the form of a cylinder generated by revolution round the axis 6 with an intermediate diameter d₇ between the diameters d₅ and d₆ and substantially equal to, though slightly smaller than, the diameter d₃, while being greater than the diameter d₁ of the internal peripheral face 14 of the passage 10.

This internal peripheral face portion 36 of the body 7 therefore extends in the direction 11, from the groove 35, to a level corresponding to that of the entrance 12 and, in an embodiment not illustrated but easily understood by a person skilled in the art, could be connected round the entrance to the internal peripheral face 14 by a plane annular front face generated by revolution round the axis 6 and turned in the direction 11 so as to be flush with the face 8 when the body 7 is engaged in the hole 3.

In the example illustrated, however, this connection is not direct and the body 7 carries an annular flange 39 generated by revolution round the axis 6 and forming a projection relative to the face portion 36, in the radial direction away from the axis 6, round the entrance 12, in a manner which is integral but can preferably easily be detached by the deliberate action of an installer, in particular by pulling or sectioning.

More precisely, the flange 39 is delimited in the direction 11 by a plane annular face 40 generated by revolution round the axis 6 to which it is perpendicular; this face 40 is therefore connected, toward the axis 6, to the external peripheral face portion 36, and can therefore be placed flat against the face 8 of the wall 5, round the hole 3, when the body 7 of the plug 1 is correctly engaged in this hole 3.

In the direction 11, the flange 39 is also delimited by a plane annular face 41 generated by revolution round the axis 10, this face 41 being turned in the direction 11 and therefore placed so as to project in this direction from the face 8 of the wall 5 when the flange 39 rests with its face 40 on the face 8 of this wall.

In the direction away from the axis 6, the two faces 40 and 41 are mutually connected by an annular edge 42 generated by revolution round the axis 6 and convex in the direction away from the axis 6, this form being optional.

In the direction toward the axis 6, the face 41 is connected to a cylindrical internal peripheral face 42 generated by revolution round the axis 6, with a diameter identical to that of the face 14, which this face 42 extends directly beyond the entrance 12 in the direction 11.

The slots 20 open into the portion 36 over the majority of its longitudinal dimension from the groove 35 connecting it to the portion 29, in the same way as they extend over all the portions 24, 25, 26, 27, 28 and 29 and grooves 30, 31, 32, 33, 34 and 35.

In the longitudinal extension of each slot 20 to the face 40 of the flange 39, in the same mean plane 21 as the slots 20, the body 7 carries a respective integral longitudinal rib 44, projecting from the portion 26 in the direction away from the axis 6, intended to hold the plug 1, especially against a rotation round the axis 6, inside the hole 3. To this end, for example, each of the ribs 34, of which there are two here like the slots 20 but which could be provided in a different number preferably distributed uniformly angularly round the axis 6 and/or mutually symmetrical about the axis 6, have a conventional semicircular cross-section with a longitudinal generatrix 45 along the respective mean plane 21 or half plane.

As shown in Fig. 4, the generatrices 45 define, with reference to the axis 6, a diameter, not designated, which is substantially identical to the maximum diameter of the edge 42 of the flange 39 to which each of the generatrices 45 is therefore connected.

Owing to the material constituting the plug 1, each rib 44 can be crushed elastically and/or plastically toward the axis 6 in contact with the face 37 of the hole 3 during coaxial introduction of the body 7 of the plug into the hole 3.

Longitudinally between the slots 20 and the flange 39, moreover, the external peripheral face portion 36 of the body 7 of the plug carries at least one integral transverse ring 46 which also undergoes such deformation during the coaxial penetration of the body 7 of the plug into the hole 3 to create a non-return effect.

In the example illustrated, two of these rings 46 are provided which are each delimited by a truncated cone-shaped external peripheral face 47 generated by revolution round the axis 6 and flaring in the direction 11 from their connection to the external peripheral face portion 36, to a diameter, not designated, which may be equal to the diameter d₅ and by a plane annular shoulder 48 generated by revolution round the axis 6 and turned in the direction 11 to connect the face 47 to the external peripheral face portion 7 in the direction 11.

A different number of ribs 44 and non-return rings 46 could obviously be provided without departing from the scope of the present invention, just as both or either of these arrangements could be omitted, like the flange 39, without departing from the scope of the present invention.

Furthermore, the cylindrical external peripheral face portion 36 of the body 7, also optionally but preferably, has several mutually identical notches 49 uniformly distributed angularly round the axis 6 and/or mutually symmetrical about the axis 6.

In the example illustrated, there are two of these notches 49 which are diametrically opposed with reference to the axis 6 and border a plane 50 which contains the axis 6 and is perpendicular to the plane 21, while being located on a respective side of this plane to assist production of the plug 1 by moulding, as will emerge hereinafter, and are connected in the direction 9 to the transitional groove 35 between the portions 29 and 36 whereas, in the direction 11, they extend only over a proportion of the longitudinal dimension of the portion 36 between the groove 35 and the closest non-return ring 46.

Each of the notches 49 is delimited in the example illustrated by a flank 51 disposed in the plane 50, by a plane base 53 parallel to the plane 21 from the connection between the notch 49 and the groove 35 into the immediate vicinity of the end of the notch 49 in the direction 11, in the region of which the base 53 bends in a quarter cylinder and is then connected to the external peripheral face portion 36, like the flank 51, and by a ridge 52 parallel to the plane 50 and connecting the base 53 to the portion 36 remotely from the flank 51. The distance mutually separating the bases 53, perpendicularly to the plane 21, is greater at every point than the diameter of the longitudinally corresponding regions of the passage 10, so the notches 49 do not open into the passage 10.

Partly inside each of the notches 49, the body 7 carries a respective integral elastically flexible tongue 54 for fixing in the hole 3, to prevent rotation and/or pulling, by resting with elastic bias and preferably with plastic deformation against the internal peripheral face 37 of this hole 3.

To this end, each tongue 54 is connected integrally to the body 7 in the region of the transitional groove 35 between the external peripheral face portions 29 and 36 thereof, while having, in the direction away from the axis 6, a face 55 which, defined by generatrices perpendicular to the plane 50, has an inclination to the plane 21 which, in the region of the groove 35, is substantially identical to that of the portion 29 relative to the axis 6, so the face 55 is connected virtually without an offset to the portion 29, while approximately extending the portion 29 in the direction 11.

However, the face 55 progressively moves away from the plane 21 in its regions removed successively further, in the direction 11, from its connection to the body 7 in the region of the groove 35 and has, for example, the form of a portion of a cylinder generated by revolution round an axis 56 perpendicular to the plane 50 and situated at the exterior of the body 7 on the same side as the tongue 54 so that the tongue forms an elastic projection from the external peripheral face portion 36 of the body 7 outside the corresponding notch 49 by progressively moving away from the axis 6 and the external peripheral face portion 36 in the direction 11.

Apart from the face 55, the tongue 54 has two edges 56, 57, of which the first coincides with the plane 50, in other words is co-planar with the plane 51 of the corresponding notch 49, and of which the second is offset from the plane 50 on the same side as the ridge 52 of the notch 49, while still being closer to the plane 50 than this ridge 52.

Toward the plane 21, this tongue 54 is delimited by a face 58 parallel to the face 55 and connected to the base 43 of the corresponding notch 49 in the region of the groove 35.

This face 58 is connected to the face 55 on the one hand by the two edges 56 and 57 perpendicular to these two faces 55 and 58 and, on the other hand, in a free end region 59 of the tongue, in other words at its end, in the direction 11, remote from its integral connection to the body 7, by a semi-cylindrical extreme face 60 generated by revolution round an axis 61 perpendicular to the plane 50.

In the example illustrated, which corresponds to a preferred embodiment of the present invention, each tongue 54 has dimensions which are such that it extends longitudinally in the direction 11 further than the corresponding notch 49 so it cannot retract completely inside the notch 49 by elastic deflection.

If the tongue 54 is not subjected to any stress, its face 58 is spaced radially from the joint between the base 53 of the corresponding notch and the external peripheral face portion 36 of the body 7. If the body 7 of the plug 1 is introduced coaxially into the hole 3 by translation in the direction 9 relative to the wall 5, contact between the face 55 of each tongue 54 and a transitional ridge between the internal peripheral face 37 of the hole 3 and the face 8 of the wall 5 causes, in a first stage, an elastic deflection of each tongue 54 in the direction toward the axis 6 then, in a second stage, in other words once the face 58 has come into contact with the joint between the base 53 of the corresponding notch 49 and the external peripheral face portion 36 of the body 7, a plastic deformation of the tongue 58 which considerably strengthens the fixing of the body 7 of the plug 1 in the hole 3.

Depending on the nature of the material 4, the material 4 can obviously undergo a deformation, possibly an elastic deformation but usually a plastic deformation, during the passage of the tongues 54.

Once the body 7 of the plug 1 has been completely inserted into the hole 3, the orientation of the tongues 54 and a degree of residual elasticity in their region located inside the corresponding notch 49 helps to prevent pulling of the plug 1, in other words extraction thereof in the direction 11 relative to the hole 3.

According to a variation, not shown, the tongues 54 could obviously be given a longitudinal dimension at most equal to that of the corresponding notches 49 in which the tongues 54 could therefore retract completely, by elastic deformation, on penetrating into the hole 3, in a manner known *per se*. In comparison with this known solution, the solution just described allows much more effective fixing.

If a plug 1 according to the invention is to be used to fix a screw 2 in a wall 5, a plug dimension 1 is selected as a function of the standard dimensions of the screw 2 to be used, and the hole 3 is drilled to the diameter D₃ and to a depth which should be slightly greater than the longitudinal dimension of the body 7 of the plug between the entrance 12, in other words the face 40 of the flange 39 when such a flange is present, and the entrance 13, in other words the front face 22. In this respect, the term "depth" should be understood in its normal sense when the material 4 extends continuously along the axis 6 over a length greater than this longitudinal dimension of the body 7 of the plug, in other words when the wall 5 can be considered as solid wall; when the longitudinal dimension or thickness of the material 4 is smaller than the longitudinal dimension of the body 7 of the plug 1, corresponding to what is generally expected in the case of a hollow wall, this term "depth" should be interpreted as combining the thickness of the wall 5, measured along the axis 6 from the face 8, and the longitudinal dimension of a clearance which has to be provided along the axis 6 and around it, longitudinally remote from the face 8 relative to the wall 5.

In fact, more particularly when the body 7 is continuous in the circumferential direction so as to form a nut in the immediately vicinity of its entrance 13, it is necessary to have some longitudinal clearance inside the hole or outside the hole 3 in the direction 9 relative to the entrance 13 to allow the thread 19 of the screw 2 to mesh with the nut formed in this way.

To ensure that the hole 3 has sufficient depth for this purpose, where the term "depth" should be interpreted in either of the aforementioned senses, the body 7 of the plug 1 carries an integral axial longitudinal extension 62 projecting in the direction 9 over its front face 22 and dimensioned longitudinally in such a way that the sum of its longitudinal dimension and the longitudinal dimension of the body 7 between its front face 22 delimiting the entrance 13 and the entrance 12 or the face 40 of the flange 39, if a flange of this type is provided, is at least equal to the minimum depth required by the hole 3 along the axis 6.

This extension 62 is designed so that it does not obstruct the passage of the screw 2, especially when the plug 1 is placed on a hollow wall in the above-mentioned sense.

To this end, this extension 62 is preferably capable of detaching itself spontaneously from the body after the plug 1 has been positioned in the hole 3, in particular under the influence of a longitudinal thrust applied by the screw 2 in the direction of screwing 9, obviously when it arrives at the entrance 13 and leaves it in this direction 9.

This is the case, especially, in the illustrated embodiment of this extension 62, this ability resulting quite simply from the configuration of this extension 62 which, in particular, is mechanically weak in comparison with the body 7.

In this example, the extension 62 has the form of a bridge of material transversely straddling the entrance 13 of the passage 10 and connected on either side of it to the front face 22 of the body 7 in two regions 64 which are diametrically opposed with respect to the axis 6.

More precisely, the extension 62 is arranged along the plane 50 constituting a first plane of symmetry for it and straddles the plane 21 constituting a second plane of symmetry for it.

When viewed in the plane 50 or in a direction perpendicular thereto, the extension 62 has convexity in the direction of screwing and, in practice, has the form of a V so as to form a point 63 projecting in this direction 9 from the body 7 along the axis 6, and its regions 64 for connection to the front face 22 of the body 7, corresponding to the ends of the branches of the V remote from the point 63, are mutually symmetrical about the plane 21.

The extension 62 has, for example, a normal square cross-section which is symmetrical about the plane 50 and the area of this normal cross-section is small in relation to that of the cross-section of the material constituting the body 7, especially in the region of the front face 22, to facilitate detachment of the extension 62, especially under the influence of the screw 2 itself during the screwing operation.

Obviously, like all the other components of the plug 1 described hitherto, the extension 62 is advantageously produced integrally with the body 7 by injection moulding, and the preferred configuration just described does not involve any complexity of production if the characteristic process of the present invention, which will now be described, is adopted, since a process of this type could be used more generally for producing plugs of whatever type not having this extension 62 or having an extension with a similar function in a different form.

However, the process according to the invention will now be described with reference to Fig. 9, in relation to the production of a plug having all the characteristics described with reference to Fig. 1 to 8, but a person skilled in the art could obviously modify this process as required for the production of plugs having different configurations without departing from the scope of the present invention.

This process employs an injection moulding installation which is illustrated schematically in Fig. 9, the production details for this installation lying within the normal ability of a person skilled in the art.

In this schematic representation, the installation 65 comprises five main components, of which only four are shown and will be described in the assembled state as illustrated in Fig. 9 for the injection moulding of a plug, these components being separable, in particular to allow the demoulding of the plug after production and the cleaning of the equipment.

One of these components is a punch 66 which is illustrated in broken lines in Fig. 9 and has an external form mating with that of the passage 10 and its extension 43, in other words in particular a form generated by revolution round a longitudinal axis 67 which coincides with the axis 6 of the plug being produced by means of the installation 65, as will emerge hereinafter.

Characteristically of the embodiment of the process according to the invention, the punch 66 is solid and compact, in other words is not used for the supply of material constituting the plug in the plastic state. More precisely, the punch 66 is delimited, in the direction away from the axis 67, by external peripheral faces 68, 69, 70 of which the first is a cylinder generated by revolution round the axis 67 and mates directly with the face 14 with its extension 43, of which the second is a truncated cone generated by revolution round the axis 67 with a form directly mating with that of the face 15 and of which the third is a cylinder generated by revolution round the axis 67 and mating directly with the face 16.

The punch 66 is also delimited, in the directions 103 and 104 of the axis 67 corresponding to the direction of screwing 9 and to the opposing direction 11 respectively with reference to the plug to be produced, by plane transverse faces 77 and 71 having the respective form of a disc with axis 67.

The face 71 which is turned in the direction 104 and is connected to the face 68 in the direction away from the axis 67, rests flat against a face 72, which is also flat and perpendicular to the axis 67 but has the opposing orientation, of a second component 73, or mould base, of the installation 65, the punch 66 being connected to this mould base 73 by any means which is not shown but can easily be imagined by a person skilled in the art to allow the punch 66 to be separated from the mould base 73 as desired or to be reassembled in the described relationship.

The face 72 is extended in the direction away from the axis 67 beyond an extension of the face 68 of the punch 66 with a shape mating with that of the face 41 of the flange 39 and has, round the face 68, an annular return 78 generated by revolution round the axis 67 and mating with the edge 42 of the flange 39.

This return 74 connects the face 72 to a face 75 of the base of the mould 73, this face 75 being plane, perpendicular to the axis 67, orientated like the face 72 and spaced from this face 72 along the axis 67 by a distance corresponding to the thickness of the flange 39 parallel to the axis 6 between the faces 40 and 41 such that the faces 72 and 74 define, inside the face 75 round the face 68 of the punch 66, a cavity 76 mating with the flange 39 to form a mould impression thereof.

Obviously, for producing a plug 1 not comprising a flange 39, the face 75 of the mould base 73 will be completely flat, the face 68 of the punch 66 will mate closely with the single face 14 of the passage 10, in other words will be shorter along the axis 67 than in the example illustrated, and the face 71 will be placed flat directly against the face 75 in a manner which is not illustrated but will easily be understood by a person skilled in the art.

The face 77 of the punch 66 turned in the direction 103 is in turn connected to the face 70 thereof in the direction away from the axis 67, and is separated from the face 71 along the axis 67 by a distance equal to that mutually separating, along the axis 6, either the face 41 of the flange 39 and the front face 22 of the body 7 of the plug 1 to be produced if it is to have a flange 39 of this type, or the entrance 12 of the passage 10 and the front face 22 of the body 7 of the plug 1 to be produced if it is not to comprise a flange 39, in such a way that the face 77 is co-planar with this face 22 when the plug is being produced.

Round the punch 66, the installation 65 comprises a die 78 which, for demoulding the plug produced, is formed from several parts detachably mutually joined parts along half planes defined by the axis 67 and uniformly distributed angularly round it.

In the example illustrated, for producing the plug 1 described with reference to Fig. 1 to 8, the die 78 is composed only of two mutually identical parts or shells 79 constituting two components of the installation 65, only one of which is illustrated in Fig. 5.

The two parts 79 are mutually joined flat by a respective plane face 80 located in a plane passing through the axis 67 and coinciding with the plane 50 of the plug to be produced.

A cavity 115 communicating with the cavity 76 is dug in the face 80 round the axis 67 and has a shape mating with the external shape of the corresponding half of the plug 1 in the form of faces 81 to 88 closely mating with the faces or face portions 22 to 29 respectively, of ribs 89 to 94 respectively mating with the grooves 31 to 35 and of an internal peripheral face 95 closely mating with the external peripheral face portion 36 and having hollows 96 and 97 respectively mating with one of the ribs 45 and of the corresponding half of the non-return rings 46 as well as an offset 98 mating 53 with the notch 49 corresponding to the half of the plug 1 under consideration. The face 80 also has a recessed shape mating with that of the corresponding tongue 54, namely faces 99, 100, 101 and 102 which mate closely with the edge 57 and the faces 55, 58, 60 of the tongue 54 respectively, of which the other edge 56 is formed by the face 80 of the other part 79 of the die 78.

It will however be noted that instead of being limited to a half crown which mates closely with the half of the front face 22 of the body 7 of the plug 1 to be produced, the face 81 turned in the direction 104 has the shape of half a disc with axis 67 so half of the face 77 of the punch 66 is placed flat thereon with a mutual longitudinal abutment round the axis 67 whereas the other half of the face 77 of the punch 66 is similarly placed flat on the face 81 of the other part 79 of the die 78. This flat mutual contact between the face 77 of the punch 66 and the faces 81 of the two parts 79 of the die 78 round the axis 67 creates conditions which prevent insinuation in this region of the thermoplastic material in the liquid state intended for producing the plug 1 so as to leave the entrance 13 of the passage 10 clear in the direction of screwing 9 which corresponds to the longitudinal direction 103 in Fig. 9, with reference to which the faces 77 and 81 constitute extreme downstream faces of the punch 66 and of the cavity 115 in the part 79 of the die 78 respectively.

Furthermore, a cavity 116 which communicates with the cavity 115 is dug in the face 80 and has a shape mating with that of one of the halves, defined by the plane 50, of the extension 62 in the form of a bridge of material.

More precisely, this cavity 116 defines two rectilinear half channels 105 which are completed by one part 79 of the die 78 to the other to define two channels for the injection of thermoplastic material in the liquid state. These two half channels 105 open into the face 81 through two injection regions or points which are diametrically opposed about the axis 67, radially further from the axis 67 than the joint between the face 77 of the punch 66 and the face 70 thereof and converge mutually in the direction 103 and are connected mutually to the axis 67 by a common inlet for material in the liquid state. In the example illustrated, this inlet is located in the region of a plane face 106, perpendicular to the axis 67, of the part 79 of the die 78, which face 106 is opposed along this axis to a plane face 107 perpendicular to the axis 67 by means of which the part 79 rests flat against the face 75 of the mould base 73.

A person skilled in the art will easily understand that if the two parts 79 are mutually joined flat by the face 80, and the punch 66 and the mould base 73 occupy the position just described, the cavities 76, 115 and 116 complement one another so as to define an impression 108 having a shape closely mating with that of the plug 1 to be produced, as described with reference to Fig. 1 to 8. Obviously, the face 77 of the punch 66 therefore abuts against the faces 81 of the two parts 79 of the die 78 to prevent insertion of thermoplastic material in the liquid state into what will become the entrance 13 of the passage 10; with regard to the entrance 12 thereof, this function is fulfilled by the flat contact between the face 71 of the punch 66 and the face 72 of the mould base 73.

A respective core 112 is fitted, preferably detachably, in each of the parts 79 of the die 78, and has an external shape mating with that of one of the slots 20 to be produced and occupies a position relative to the position of this slot relative to the body 7 of the plug 1 to be produced. Each of the cores 112 is joined to the punch 66 in the direction of the axis 67 in order to prevent insinuation of the thermoplastic material in the liquid state between them, in other words blocking of the slots 21 by this material during production of the plug 1.

To allow the injection of thermoplastic material through the channels formed by the half channels 105, in the impression 108 produced in this way, a fifth component 109 of the installation 65 is provided which can consist of an injection nozzle for thermoplastic material in the liquid state, not described in detail and well known *per se*. The component 109 is shown in Fig. 9 resting flat by a plane face 110 on the face 106 of the part 79 of the die 78 in a relationship of detachable mutual connection by means not shown but well known *per se* to a person skilled in the art and in a position which is such that it has, along the axis 67 in the extension of the inlet for material 116 from the half channels 105 in the direction 103, an injection channel 111 thus communicating on the one hand with the channels defined by the half channels 105 and on the other hand with means, not shown and well known *per se*, for supplying thermoplastic material in the liquid state.

Thus, once the various components of the installation 65 have been assembled, including the cores 112 interposed inside the impression 108 between each part 79 of the die 78 and the punch 66 respectively, thermoplastic material in the liquid state is injected into the impression 108 via the injection channel 111 in the direction 104 and through the injection channels defined by the half channels 105 diverging in this direction so the thermoplastic material in the liquid state opens into the impression 108 through the face 81 in regions diametrically opposed about the axis 67 and further removed from it than the face 70 of the punch 66 and which ensures optimum distribution of the thermoplastic material in the liquid state within the impression 108 until it completely fills it with thermoplastic material in the liquid state.

Next, the thermoplastic material is caused or allowed to set to form the plug 7, then the base of the mould 13 and the punch 66 on the one hand and the component 109 on the other hand are separated from the die 78, and the parts of the die 79 and the cores 112 are subsequently separated to demould the plug 7 produced in this way.

It is noted that the plastics material located in the channels defined by the half channels 105 forms a moulding sprue which is separated from the material remaining in the channel 111 but which remains connected to the body 7 of the plug produced in order to constitute the extension 62 thereof in the form of a bridge of material.

It will be observed that, if an extension 62 of this type is not desired, especially in the case of plugs of which the slots 20 are extended to the front face 22, the moulding sprue can be left on the plug body 7 without drawbacks and thus form a bridge of material, this bridge of material easily breaking during expansion of the plug 1 at the moment when a screw 2 is screwed therein in the direction 9 after the plug 1 has been placed in a hole 3 in a wall 5.

## Claims

1. Plug for fixing a screw (2) in a hole (3) along a predetermined longitudinal axis (6), of the type comprising a tubular longitudinal body (7) defining an internal longitudinal passage (10) for the screwing of the screw (2) and having an external profile for fastening in the hole (3) in a longitudinal direction opposed to a longitudinal direction (9) for screwing the screw (2) in the passage (10), the body (7) also comprising at least two longitudinal slots (20) which open transversely into the passage (10) and into the fastening profile, are closed in said opposing direction (11), are uniformly distributed angularly round the axis (6) and/or are mutually symmetrical about the axis (6) and allow transverse expansion of the body (7) during the screwing of a screw (2) into the passage (10), wherein body (7) has an external longitudinal alternation of portions (24 to 29) of which the cross-section does not have symmetry of revolution round the axis (6), which are divided by slots (20) and are offset angularly relative to one another round the axis (6) so as to form relative to one another transverse projections (38) which are angularly mutually offset round the axis (6), defining the fastening profile **characterised in that** the slots (20) are also closed in the screwing longitudinal direction (9) and at least one longitudinally extreme portion (24), in the screwing longitudinal direction (9), is continuous in a circumferential direction round the axis.

2. Fixing plug according to claim 1, **characterised in that** at least some portions (24 to 29) are flared in said opposite direction (11).

3. Fixing plug according to one of claims 1 and 2, **characterised in that** said cross-section is approximately polygonal and symmetrical about the axis (6).

4. Fixing plug according to claim 3, **characterised in that** said cross-section is approximately hexagonal and **in that** each portion (24 to 29) is angularly offset by 30° round the axis (6) relative to a longitudinally adjacent portion (24 to 29).

5. Fixing plug according to any one of claims 1 to 4, **characterised in that** the body (7) has an external transverse annular groove (30 to 34) between two longitudinally adjacent portions (24 to 29).

6. Fixing plug according to any one of claims 1 to 5, **characterised in that** the screwing passage (10) is open in both longitudinal directions (9, 11).

7. Fixing plug according to any one of claims 1 to 6, **characterised in that** the screwing passage (10) is delimited by a cylindrical internal peripheral face (16) of the body (7) generated by revolution round the axis (6) with a diameter which is such that this internal peripheral face (16) meshes for the screwing of the screw (2), at least over a proportion of the longitudinal span of the passage (10) from a longitudinally external region of the body (7) in the screwing direction (9) and at least over a proportion of the longitudinal span of the slots (20).

8. Fixing plug according to claim 7, **characterised in that** the screwing passage (10) is delimited by a cylindrical internal peripheral face (14) of the body (7) generated by revolution round the axis (6) with a diameter which is such that this internal peripheral face (14) allows coaxial guidance of the screw (2) without meshing for the screwing thereof, over a proportion of the longitudinal span of the passage (10) from a longitudinally extreme region of the body (7) in said opposing direction (11), **in that** said cylindrical faces (14, 16) are mutually connected by a truncated cone-shaped face (15) generated by revolution round the axis (6) and **in that** the slots (20) are closed in said opposing direction (11) at a longitudinally intermediate level of said truncated cone-shaped face (15).

9. Fixing plug according to any one of claims 1 to 8, **characterised in that**, in a longitudinal extreme region in the direction of screwing (9), the body (7) is delimited externally by an at least approximately truncated cone-shaped face (23) generated by revolution round the axis (6) and converges in the direction of screwing (9).

10. Fixing plug according to any one of claims 1 to 9, **characterised in that** the body (7) has, externally of said portions (24 to 29) in a longitudinally extreme region in said opposing direction (11), a cylindrical external peripheral face (36) generated by revolution round the axis (6).

11. Fixing plug according to claim 10, **characterised in that** the body (7) has, in said external peripheral face (36), at least two notches (49) which are uniformly distributed angularly round the axis (6) and/or are mutually symmetrical about the axis (6) and carries in each of these notches (49) a respective integral tongue (54) for fixing in the hole (3) against a rotation and/or pulling, which tongue (54) forms an elastic projection relative to said external peripheral face (36) while progressively moving away from it in said opposing direction (11).

12. Fixing plug according to claim 11, **characterised in that** each tongue (54) extends beyond the corresponding notch (49) in said opposing direction (11) in order not to retract completely into this notch (49) by elastic deflection.

13. Fixing plug according to any one of claims 1 to 12, **characterised in that** the body (7) carries at least one integral accessory means, projecting toward the exterior in a longitudinally extreme region in said opposing direction (11), for cooperation with the hole, selected from a group comprising a transverse flange (39) which, in particular, can be removed by pulling or sectioning, for limiting the penetration in the hole (3), at least one ring (46) for preventing return after penetration in the hole and at least two longitudinal ribs (49) for wedging in the hole, which are uniformly distributed angularly round the axis (6) and/or are mutually symmetrical to the axis (6).

14. Fixing plug according to any one of claims 1 to 13, **characterised in that** the body (7) carries, in a longitudinally extreme region in the direction of screwing (9), an integral axial longitudinal extension (62) which is dimensioned longitudinally such that the sum of its longitudinal dimension and of the longitudinal dimension of the body (7) between its longitudinally extreme region in the direction of screwing (9) and its longitudinally extreme region in said opposing direction (11) is at least equal to a necessary minimum depth of the hole (3) along the axis (6).

15. Fixing plug according to claim 14, **characterised in that** the axial longitudinal extension (62) is capable of detaching itself from the body (7), in particular under the influence of a longitudinal thrust applied by the screw (2) in the direction of screwing (9).

16. Fixing plug according to any one of claims 14 and 15, **characterised in that** the longitudinal extension (62) of the body (7) has the form of a ridge of material which straddles the passage (10) transversely, is connected to the body (7) on either side of the passage (10) in regions which are diametrically opposed with respect to the axis (6) and has convexity in the direction of screwing (9) so as to form a point (63) which projects in this direction (3) relative to the body (7) along the axis (6).

17. Process for producing a plug (I) according to any one of claims 1 to 16, **characterised by** the succession of stages involving:
a) producing or selecting, on the one hand, a punch (66) having an external shape mating with that of said passage (10), with a longitudinal axis (67), and, on the other hand, a die (78) having an internal shape mating with that of said fastening profile, with a longitudinal axis (67), the die (78) comprising at least two detachably mutually connected parts (79) along half planes delimited by its longitudinal axis (67) and uniformly distributed angularly round it, the punch (66) and the die (78) having, externally and internally respectively, in a longitudinal direction (103) corresponding to said direction of screwing (9), a transverse face (77, 81) for longitudinal abutment of the punch (66) in the die (78) in a relative position in which the punch (66), engaged coaxially in the die (78), defines an impression (108) therewith having a shape mating with that of the plug (1) to be produced,
b) placing the punch (66) and the die (78) in said relative position by interposing between them, inside the impression (108), cores (112), each of which has an external shape mating with that of one of the slots (20) and which occupy relative positions identical to those of the slots (20),
c) injecting a plastics material in the fluid state into the impression (108) through the abutting face (81) of the die (78) until the impression (108) is filled with plastics material in the liquid state,
d) causing or permitting the setting of the plastics material to form a plug (1),
e) separating the punch (66) from the die (78), the parts (79) from the die (78) and the cores (112) in order to remove the plug (1) from the mould.

18. Process according to claim 17, **characterised in that** said abutting faces have a configuration which is such that they mutually mate at the end of stage b) and stage c) is carried out by injecting the plastics material in the liquid state through at least one point (114) which is offset from the abutting face (81) of the punch (66) in the direction away from the longitudinal axis (6) which is then common to the punch (66) and the die (78).

19. Process according to claim 18, **characterised in that** stage c) is carried out by injecting the plastics material in the liquid state through several injection points (114) distributed uniformly angularly round the longitudinal axis (6) of the die (78) and equidistant from it, round the abutting face (77) of the punch (66).

20. Process according to any one of claims 17 to 19, for producing a plug (1) according to any one of claims 14 to 16, **characterised in that**, during stage e) at least one moulding sprue integral with the body (7) of the plug (1) is left to form said longitudinal extension (62).

21. Process according to claim 20, for producing a plug (1) according to claim 16, **characterised in that** the die (78) is produced or selected, during stage a, in such a way that two joining half planes between two of its parts (79) are co-planar and that said parts (79) define two channels (105) along these half planes for injection of plastics material in the liquid state, which have a common inlet (113) for the plastics material disposed along a longitudinal axis (67) of the die (78) and spaced longitudinally from the abutting face (81) thereof and which diverge mutually from this common inlet (113) symmetrically relative to the longitudinal axis (67) of the die (78) up to two injection points (114) which are diametrically opposed with respect to this longitudinal axis (6) to shape said moulding sprue into a bridge of material.

## Patentansprüche

1. Dübel zum Befestigen einer Schraube (2) entlang einer vorbestimmten Längsachse (6) in einem Loch (3), des Typs mit einem rohrförmigen länglichen Körper (7), der einen inneren länglichen Kanal (10) zum Einschrauben der Schraube (2) bildet und ein äußeres Profil zum Befestigen im Loch (3) in einer Längsrichtung entgegen einer Längsrichtung (9) zum Einschrauben der Schraube (2) in den Kanal (10) hat, wobei der Körper (7) auch mindestens zwei Längsschlitze (20) aufweist, die sich quer in den Kanal (10) und in das Befestigungsprofil öffnen, in der entgegengesetzten Richtung (11) geschlossen sind, gleichförmig um die Achse (6) verteilt und/oder gegenseitig symmetrisch um die Achse (6) angeordnet sind und während des Einschraubens einer Schraube (2) in den Kanal (10) eine Querausdehnung des Körpers (7) ermöglichen, wobei der Körper (7) eine äußere Abwechslung in Längsrichtung von Bereichen (24 bis 29) hat, deren Querschnitt nicht rotationssymmetrisch um die Achse (6) ist, die durch Schlitze (20) getrennt und winkelmäßig relativ zueinander um die Achse (6) versetzt sind, um relativ zueinander Quervorsprünge (38) zu bilden, die gegeneinander winkelmäßig um die Achse (6) versetzt sind und die das Befestigungsprofil bilden, **dadurch gekennzeichnet, dass** die Schlitze (20) in Einschraublängsrichtung (9) geschlossen sind und mindestens ein in Längsrichtung äußerer Bereich (24) in Einschraubrichtung (9) in Umfangsrichtung um die Achse durchgehend ist.

2. Dübel nach Anspruch, **dadurch gekennzeichnet, dass** mindestens einige Bereiche (24 bis 29) sich in entgegengesetzter Richtung (11) aufweiten.

3. Dübel nach Anspruch 1 oder 2, **dadurch gekennzeichnet, dass** der Querschnitt in etwa polygonal und symmetrisch um die Achse (6) ist.

4. Dübel nach Anspruch 3, **dadurch gekennzeichnet, dass** der Querschnitt etwa hexagonal ist und dass jeder Bereich (24 bis 29) im Umfangsrichtung um die Achse (6) um 30° bezüglich eines in Längsrichtung benachbarten Bereichs (24 bis 29) versetzt ist.

5. Dübel nach einem der Ansprüche 1 bis 4, **dadurch gekennzeichnet, dass** der Körper (7) zwischen zwei in Längsrichtung benachbarten Bereichen (24 bis 29) eine äußere, ringförmige Quernut (30 bis 34) hat.

6. Dübel nach einem der Ansprüche 1 bis 5, **dadurch gekennzeichnet, dass** der Einschraubkanal (10) in beiden Längsrichtungen (9, 11) offen ist.

7. Dübel nach einem der Ansprüche 1 bis 6, **dadurch gekennzeichnet, dass** der Einschraubkanal (10) durch eine zylindrische innere Umfangsfläche (16) des Körpers (7) begrenzt ist, die durch eine Drehung um die Achse (6) mit einem solchen Durchmesser erzeugt ist, dass die innere Umfangsfläche (16) zumindest über einen Bereich der Längserstreckung des Kanals (10) vom in Längsrichtung äußeren Bereich des Körpers (7) in Einschraubrichtung (9) und zumindest über einen Bereich der Längserstreckung der Schlitze (20) zum Einschrauben der Schraube (2) angepasst ist.

8. Dübel nach Anspruch 7, **dadurch gekennzeichnet, dass** der Einschraubkanal (10) durch eine zylindrische innere Umfangsfläche (14) des Körpers (7) begrenzt ist, die durch Drehung um die Achse (6) mit einem solchen Durchmesser erzeugt ist, dass die innere Umfangsfläche (14) über einen Teil der Längserstreckung des Kanals (10) vom in Längsrichtung äußeren Bereich des Körpers (7) in entgegengesetzter Richtung (11) eine koaxiale Führung der Schraube (2) ohne Schraubeingriff ermöglicht, dass die zylindrischen Flächen (14, 16) miteinander durch eine kegelstumpfförmige Fläche (15) verbunden sind, die durch Drehung um die Achse (6) erzeugt ist, und dass die Schlitze (20) in entgegengesetzter Richtung (11) an einem in Längsrichtung mittleren Bereich der kegelstumpfförmigen Fläche (15) geschlossen sind.

9. Dübel nach einem der Ansprüche 1 bis 8, **dadurch gekennzeichnet, dass** der Körper (7) in einem in Längsrichtung äußeren Bereich in Schraubrichtung (9) außen durch eine zumindest etwa kegelstumpfförmige Fläche (23) begrenzt ist, die durch Drehung um die Achse (6) erzeugt ist und in Einschraubrichtung (9) konvergiert.

10. Dübel nach einem der Ansprüche 1 bis 9, **dadurch gekennzeichnet, dass** der Körper (7) in einem in entgegengesetzter Richtung (11) in Längsrichtung äußeren Bereich außerhalb der Bereiche (24 bis 29) eine zylindrische äußere Umfangsfläche (36) hat, die durch Drehung um die Achse (6) erzeugt ist.

11. Dübel nach Anspruch 10, **dadurch gekennzeichnet, dass** der Körper (7) in der äußeren Umfangsfläche (36) mindestens zwei Nuten (49) hat, die gleichförmig in Umfangsrichtung um die Achse (6) verteilt sind und/oder zueinander symmetrisch um die Achse (6) angeordnet sind, und in jeder dieser Nuten (49) eine integrale Zunge (54) zum Festsetzen im Loch (3) gegen Drehung und/oder Zug trägt, die einen elastischen Vorsprung bezüglich der äußeren Umfangsfläche (36) bildet, während sie sich von dieser in entgegengesetzter Richtung (11) allmählich weg bewegt.

12. Dübel nach Anspruch 11, **dadurch gekennzeichnet, dass** sich jede Zunge (54) in entgegengesetzter Richtung (11) über die entsprechende Nut (49) hinaus erstreckt, um sich nicht durch elastische Verformung vollständig in die Nut (49) zurückzuziehen.

13. Dübel nach einem der Ansprüche 1 bis 12, **dadurch gekennzeichnet, dass** der Körper (7) mindestens ein integrales Zubehörmittel zum Zusammenwirken mit dem Loch trägt, das sich in einem in Längsrichtung äußeren Bereich in entgegengesetzter in Richtung auf das Äußere erstreckt und aus einer Gruppe gewählt ist, die einen Querflansch (39) zum Begrenzen des Einsteckens in das Loch (3), der insbesondere durch Herausziehen oder Abtrennen entfernt werden kann, mindestens einen Ring (46) zum Verhindern des Zurückziehens nach dem Einsetzen in das Loch und mindestens zwei Längsrippen (49) zum Verkeilen im Loch umfasst, die gleichförmig am Umfang um die Achse (6) verteilt und/oder zueinander symmetrisch zur Achse (6) angeordnet sind.

14. Dübel nach einem der Ansprüche 1 bis 13, **dadurch gekennzeichnet, dass** der Körper (7) in einem in Einschraubrichtung (9) in Längsrichtung äußeren Bereich eine integrale axiale Längsverlängerung (42) aufweist, die in Längsrichtung so bemessen ist, dass die Summe ihrer Längsabmessung und die Längsabmessung des Körpers (7) zwischen seinem in Einschraubrichtung (9) in Längsrichtung äußeren Bereich und seinem in entgegengesetzter Richtung (11) in Längsrichtung äußeren Bereich mindestens gleich der erforderlichen minimalen Tiefe des Loches (3) entlang der Achse (6) ist.

15. Dübel nach Anspruch 14, **dadurch gekennzeichnet, dass** die axiale Längsverlängerung (62) sich selbst vom Körper (7) lösen kann, insbesondere unter dem Einfluss eines in Einschraubrichtung (9) von der Schraube (2) aufgebrachten Längsdrucks.

16. Dübel nach Anspruch 14 oder 15, **dadurch gekennzeichnet, dass** die Längsverlängerung (62) des Körpers (7) die Form einer Materialleiste hat, die den Kanal (10) quer überspannt, zu beiden Seiten des Kanals (10) in Bereichen, die einander bezüglich der Achse (6) diametral gegenüberliegen, mit dem Körper (7) verbunden ist und in Einschraubrichtung (9) konvex ist, so dass eine Spitze (63) gebildet wird, die entlang der Achse (6) in dieser Richtung (3) bezüglich dem Körper (7) vorsteht.

17. Verfahren zur Herstellung eines Dübels (1) gemäß einem der Ansprüche 1 bis 16, **gekennzeichnet durch** die Folge von Schritten:
a) Herstellen oder Auswählen einerseits eines Dorns (66) mit einer an den Kanal (10) angepassten Außenform mit einer Längsachse (67) und andererseits eines Gesenks (78) mit einer an das Befestigungsprofil angepassten Innenform mit einer Längsachse (67), wobei das Gesenk (78) mindestens zwei trennbar entlang Halbebenen miteinander verbundene Teile (79) umfasst, die **durch** die Längsachse (67) begrenzt sind und gleichförmig um diese in Umfangsrichtung verteilt sind, der Dorn (66) und das Gesenk (78) jeweils in einer Längsrichtung (103) entsprechend der Einschraubrichtung (9) innen und außen eine Querfläche (77, 81) zur Anlage des Dorns (66) an dem Gesenk (78) in einer relativen Stellung aufweisen, in der der in koaxialem Eingriff mit dem Gesenk (78) stehende Dorn (66) mit diesem einen Hohlraum (108) bildet, der eine Form entsprechend derjenigen des herzustellenden Dübels (1) hat,
b) Positionieren von Dorn (66) und Gesenk (78) in dieser relativen Stellung **durch** Anordnung von Kernen (112) im Hohlraum (108) zwischen ihnen, wobei jeder Kern eine Außenfläche hat, die mit der eines der Schlitze (20) übereinstimmt und die Kerne relative Stellungen identisch mit denjenigen der Schlitze (20) einnehmen,
c) Einspritzen von sich im flüssigen Zustand befindendem Kunststoffmaterial in den Hohlraum (108) **durch** die Anlagefläche (81) des Gesenks (78), bis der Hohlraum (108) mit Kunststoffmaterial im flüssigen Zustand gefüllt ist,
d) Bewirken oder Ermöglichen des Aushärtens des Kunststoffmaterials zur Bildung eines Dübels (1),
e) Trennen des Dorns (66) vom Gesenk (78), der Teile (79) vom Gesenk (78) und den Kernen (112), um den Dübel (1) aus der Form herauszunehmen.

18. Verfahren nach Anspruch 17, **dadurch gekennzeichnet, dass** die Anlageflächen eine solche Form haben, dass sie am Ende des Schrittes b) und beim Ausführen des Schrittes c) durch Einspritzen des im flüssigen Zustand befindlichen Kunststoffmaterials durch mindestens einen Punkt (114) aneinander angepasst sind, der gegenüber der Anlagefläche (81) des Dorns (66) in Richtung weg von der dann dem den Dorn (66) und dem Gesenk (78) gemeinsamen Längsachse (6) versetzt ist.

19. Verfahren nach Anspruch 18, **dadurch gekennzeichnet, dass** der Schritt c) durch Einspritzen von im flüssigen Zustand befindlichen Kunststoffmaterial durch verschiedene Einspritzpunkte (114) ausgeführt wird, die gleichförmig am Umfang des Gesenks (78) um die Längsachse (6) und in gleichem Abstand von dieser um die Anlagefläche (77) des Dorns (66) verteilt sind.

20. Verfahren nach einem der Ansprüche 17 bis 19 zur Herstellung eines Dübels (1) gemäß einem der Ansprüche 14 bis 16, **dadurch gekennzeichnet, dass** während des Schrittes e) mindestens ein Eingusskanal integral mit dem Körper (7) des Dübels (1) belassen wird, um die Längsverlängerung (62) auszubilden.

21. Verfahren nach Anspruch 20 zur Herstellung eines Dübels (11) gemäß Anspruch 16, **dadurch gekennzeichnet, dass** das Gesenk (78) im Schritt a) so hergestellt oder ausgewählt wird, dass zwei verbindende Halbebenen zwischen zwei seiner Teile (79) koplanar sind und dass diese Teile (79) entlang dieser Halbebenen zwei Kanäle (105) zum Einspritzen von im flüssigen Zustand befindlichen Kunststoffmaterial bilden, die einen gemeinsamen Einlass (113) für das Kunststoffmaterial haben, der entlang einer Längsachse (67) des Gesenks (78) und in Längsrichtung im Abstand von dessen Anlagefläche (81) vorgesehen ist und die von diesem gemeinsamen Einlass (113) symmetrisch bezüglich der Längsachse (67) des Gesenks (78) voneinander weg zu zwei Einspritzpunkten (114) divergieren, die einander bezüglich der Längsachse (6) diametral gegenüber liegen, um den Eingusskanal zu einer Materialbrücke zu formen.

## Revendications

1. Bouchon permettant de fixer une vis (2) dans un trou (3) le long d'un axe longitudinal prédéterminé (6) du type comprenant un corps longitudinal tubulaire (7) définissant un passage longitudinal interne (10) pour le vissage de la vis (2) et ayant un profil externe pour la fixation dans le trou (3) dans une direction longitudinale opposée à la direction longitudinale (9) pour le vissage de la vis (2) dans le passage (10), le corps (7) comprenant également au moins deux fentes longitudinales (20) qui s'ouvrent de manière transversale dans le passage (10) et dans le profil de fixation, sont fermées dans ladite direction opposée (11), sont réparties de manière uniforme et angulaire autour de l'axe (6) et/ou sont mutuellement symétriques autour de l'axe (6) et permettent également la dilatation transversale du corps (7) pendant le vissage d'une vis (2) dans le passage (10), dans lequel le corps (7) a une modification longitudinale externe des parties (24 à 29) dont la section transversale n'a pas de symétrie de révolution autour de l'axe (6), qui sont divisées par des fentes (20) et sont décalées de manière angulaire l'une par rapport à l'autre autour de l'axe (6) afin de former l'une par rapport à l'autre des saillies transversales (38) qui sont mutuellement décalées de manière angulaire autour de l'axe (6), définissant un profil de fixation, **caractérisé en ce que** les fentes (20) sont également fermées dans la direction longitudinale de vissage (9) et au moins une partie longitudinalement extrême (24), dans la direction longitudinale de vissage (9), est continue dans une direction circonférentielle autour de l'axe.

2. Bouchon de fixation selon la revendication 1, **caractérisé en ce qu'**au moins certaines des parties (24 à 29) sont évasées dans ladite direction opposée (11).

3. Bouchon de fixation selon l'une des revendications 1 et 2, **caractérisé en ce que** ladite section transversale est approximativement polygonale et symétrique autour de l'axe (6).

4. Bouchon de fixation selon la revendication 3, **caractérisé en ce que** ladite section transversale est approximativement hexagonale et **en ce que** chaque partie (24 à 29) est décalée de manière angulaire de 30° autour de l'axe (6) par rapport à une partie longitudinalement adjacente (24 à 29).

5. Bouchon de fixation selon l'une quelconque des revendications 1 à 4, **caractérisé en ce que** le corps (7) a une rainure annulaire transversale externe (30 à 34) entre deux parties longitudinalement adjacentes (24 à 29).

6. Bouchon de fixation selon l'une quelconque des revendications 1 à 5, **caractérisé en ce que** le passage de vissage (10) est ouvert dans les deux directions longitudinales (9, 11).

7. Bouchon de fixation selon l'une quelconque des revendications 1 à 6, **caractérisé en ce que** le passage de vissage (10) est délimité par une face périphérique interne cylindrique (16) du corps (7) générée par la révolution autour de l'axe (6) avec un diamètre qui est tel que cette face périphérique interne (16) s'engrène pour le vissage de la vis (2), au moins sur une proportion de la portée longitudinale du passage (10) à partir d'une région longitudinalement externe du corps (7) dans la direction de vissage (9) et au moins sur une proportion de la portée longitudinale des fentes (20).

8. Bouchon de fixation selon la revendication 7, **caractérisé en ce que** le passage de vissage (10) est délimité par une face périphérique cylindrique interne (14) du corps (7) générée par la révolution autour de l'axe (6) avec un diamètre qui est tel que cette surface périphérique interne (14) permet le guidage coaxial de la vis (2) sans engrener la vis, sur une proportion de la portée longitudinale du passage (10) à partir d'une région longitudinalement extrême du corps (7) dans ladite direction opposée (11), **en ce que** lesdites faces cylindriques (14, 16) sont mutuellement raccordées par une face en forme de cône tronqué (15) générée par la révolution autour de l'axe (6) et **en ce que** les fentes (20) sont fermées dans ladite direction opposée (11) à un niveau longitudinalement intermédiaire de ladite face en forme de cône tronqué (15).

9. Bouchon de fixation selon l'une quelconque des revendications 1 à 8, **caractérisé en ce que**, dans une région longitudinalement extrême dans la direction de vissage (9), le corps (7) est délimité à l'extérieur par une face en forme de cône au moins approximativement tronqué (23) générée par la révolution autour de l'axe (6) et converge dans la direction de vissage (9).

10. Bouchon de fixation selon l'une quelconque des revendications 1 à 9, **caractérisé en ce que** le corps (7) a, à l'extérieur desdites parties (24 à 29) dans une région longitudinalement extrême dans ladite direction opposée (11), une face périphérique cylindrique externe (36) générée par la révolution autour de l'axe (6).

11. Bouchon de fixation selon la revendication 10, **caractérisé en ce que** le corps (7) a, dans ladite face périphérique externe (36), au moins deux encoches (49) qui sont réparties de manière uniforme et angulaire autour de l'axe (6) et/ou sont mutuellement symétriques autour de l'axe (6) et supporte dans chacune de ces encoches (49) une languette solidaire (54) respective pour la fixation dans le trou (3) contre une rotation et/ou une traction, laquelle languette (54) forme une saillie élastique par rapport à ladite face périphérique externe (36) tout en s'éloignant progressivement de celle-ci dans ladite direction opposée (11).

12. Bouchon de fixation selon la revendication 11, **caractérisé en ce que** chaque languette (54) s'étend au-delà de l'encoche (49) correspondante dans ladite direction opposée (11) afin de ne pas se rétracter complètement dans cette encoche (49) par déflexion élastique.

13. Bouchon de fixation selon l'une quelconque des revendications 1 à 12, **caractérisé en ce que** le corps (7) supporte au moins un moyen accessoire solidaire, faisant saillie vers l'extérieur dans une région longitudinalement extrême dans ladite direction opposée (11), pour la coopération avec le trou, choisi dans un groupe comprenant un rebord transversal (39) qui, en particulier, peut être retiré par traction ou sectionnement, pour limiter la pénétration dans le trou (3), au moins une bague (46) pour empêcher le retour après la pénétration dans le trou et au moins deux nervures longitudinales (49) pour le calage dans le trou, qui sont uniformément réparties de manière angulaire autour de l'axe (6) et/ou sont mutuellement symétriques par rapport à l'axe (6).

14. Bouchon de fixation selon l'une quelconque des revendications 1 à 13, **caractérisé en ce que** le corps (7) supporte, dans une région longitudinalement extrême dans la direction du vissage (9), une extension longitudinale axiale solidaire (62) qui est dimensionnée longitudinalement de sorte que la somme de sa dimension longitudinale et la dimension longitudinale du corps (7) entre sa région longitudinalement extrême dans la direction de vissage (9) et sa région longitudinalement extrême dans ladite direction opposée (11) est au moins égale à une profondeur minimum nécessaire du trou (3) le long de l'axe (6).

15. Bouchon de fixation selon la revendication 14, **caractérisé en ce que** l'extension longitudinale axiale (62) peut se détacher du corps (7), en particulier sous l'influence d'une poussée longitudinale appliquée par la vis (2) dans la direction du vissage (9).

16. Bouchon de fixation selon l'une quelconque des revendications 14 et 15, **caractérisé en ce que** l'extension longitudinale (62) du corps (7) a la forme d'une partie saillante de matériau qui est à cheval sur le passage (10) de manière transversale, est raccordée au corps (7) de chaque côté du passage (10) dans des régions qui sont diamétralement opposées par rapport à l'axe (6) et est convexe dans la direction du vissage (9) afin de former un point (63) qui fait saillie dans cette direction (3) par rapport au corps (7) le long de l'axe (6).

17. Procédé permettant de produire un bouchon (1) selon l'une quelconque des revendications 1 à 16, **caractérisé en ce qu'**il comprend les étapes consistant à :
a) produire ou sélectionner, d'une part, un poinçon (66) ayant une forme externe correspondant à celle dudit passage (10), avec un axe longitudinal (67) et d'autre part, un moule (78) ayant une forme interne correspondant à celle dudit profil de fixation, avec un axe longitudinal (67), le moule (78) comprenant au moins deux parties raccordées de manière mutuellement détachable (79) le long de demi-plans délimités par son axe longitudinal (67) et uniformément réparties de manière angulaire autour de celui-ci, le poinçon (66) et le moule (78) ayant, de manière externe et interne respectivement, dans une direction longitudinale (103) correspondant à ladite direction de vissage (9), une face transversale (77, 81) pour la butée longitudinale du poinçon (66) dans le moule (78) dans une position relative dans laquelle le poinçon (66), mis en prise de manière coaxiale dans le moule (78), définit une empreinte (108) avec celui-ci, ayant une forme correspondant à celle du bouchon (1) à produire,
b) placer le poinçon (66) et le moule (78) dans ladite position relative en interposant entre eux, à l'intérieur de l'empreinte (108), des noyaux (112), dont chacun a une forme externe correspondant à celle de l'une des fentes (20) et qui occupent des positions relatives identiques à celles de fentes (20),
c) injecter une matière plastique à l'état de fluide dans l'empreinte (108) par la face de butée (81) du moule (78) jusqu'à ce que l'empreinte (108) soit remplie avec la matière plastique à l'état liquide,
d) provoquer ou permettre le durcissement de la matière plastique pour former un bouchon (1),
e) séparer le poinçon (66) du moule (78), les parties (79) du moule (78) et les noyaux (112) afin de retirer le bouchon (1) du moule.

18. Procédé selon la revendication 17, **caractérisé en ce que** lesdites faces de butée ont une configuration qui est telle qu'elles se couplent mutuellement à la fin de l'étape b) et l'étape c) est réalisée en injectant la matière plastique à l'état liquide à travers au moins un point (114) qui est décalé de la face de butée (81) du poinçon (66) dans la direction à distance de l'axe longitudinal (6) qui est alors commune au poinçon (66) et au moule (78).

19. Procédé selon la revendication 18, **caractérisé en ce que** l'étape c) est réalisée en injectant la matière plastique à l'état liquide par plusieurs points d'injection (114) répartis de manière uniforme et angulaire autour de l'axe longitudinal (6) du moule (78) et à égale distance de celui-ci, autour de la surface de butée (77) du poinçon (66).

20. Procédé selon l'une quelconque des revendications 14 à 16, permettant de produire un bouchon (1) selon l'une quelconque des revendications 17 à 19, **caractérisé en ce que**, pendant l'étape e) on laisse au moins une carotte de moulage solidaire du corps (7) du bouchon (1) pour former ladite extension longitudinale (62).

21. Procédé selon la revendication 20, permettant de produire un bouchon (1) selon la revendication 16, **caractérisé en ce que** le moule (78) est produit ou choisi, pendant l'étape a), de sorte que les deux demi-plans de joint entre deux de ses parties (79) sont coplanaires et **en ce que** lesdites parties (79) définissent deux canaux (105) le long de ces demi-plans pour l'injection de la matière plastique à l'état liquide, qui ont une entrée commune (113) pour la matière plastique, disposée le long d'un axe longitudinal (67) du moule (78) et espacée longitudinalement de sa face de butée (81) et qui divergent mutuellement de cette entrée commune (113) de manière symétrique par rapport à l'axe longitudinal (67) du moule (78) jusqu'aux deux points d'injection (114) qui sont diamétralement opposés par rapport à cet axe longitudinal (6) pour former ladite carotte de moulage dans un pont de matière.
